# EUROPEAN PATENT SPECIFICATION

(11) **EP 0 212 805 B1**
(45) Date of publication and mention of the grant of the patent: **08.09.1993**
(21) Application number: 86304912.8
(22) Date of filing: 25.06.1986
(51) Int. Cl.: C08L 81/06, C08L 71/00, C08L 73/00

(54) **Polyether ketone/polysulphone resin composition**
Zusammensetzung auf der Basis von Polyetherketonen und Polysulphonen
Composition à base de polyéthercétones et de polysulphones

(30) Priority: 05.07.1985 JP 148988/85
(43) Date of publication of application: 04.03.1987
(73) Proprietor: SUMITOMO CHEMICAL COMPANY, LIMITED, Chuo-ku Osaka 541 (JP)
(72) Inventor: Saito, Teruo, Kusatsu-shi (JP); Asai, Kuniaki, Tondabayashi-shi (JP); Suzuki, Yasurou, Takatsuki-shi (JP)
(74) Representative: Tubby, David George

(56) References cited:
- EP-A- 0 176 989
- US-A- 4 320 224
- Patent Abstracts of Japan, unexamined applications, C field, vol. 9, no. 171, March 30, 1985, The Patent Office Japanese Government page 20 C 272

## Description

This invention relates to a resin composition comprising a polyether ketone and an aromatic polysulphone, which has excellent mechanical, thermal and chemical properties.

Compositions comprising a polyether ketone and an aromatic polysulphone have been known since the disclosure of Japanese Patent Applications Kokai (i.e. laid open) No. 34,512/83 and No. 202,256/84. For instance, a composition comprising from 2 to 98% by weight of a polyether ketone and from 98 to 2% by weight of an aromatic polysulphone is described in Japanese Patent Application Kokai No. 202,256/84. However, as the aromatic polysulphone content increases, such compositions begin to show the reduced solvent resistance and hot water resistance which are characteristic of the polyether ketone.

On the other hand, the property requirements for resin materials mainly from advanced industries (such as electrical, electronic, automotive or office automation) are becoming more stringent and more diversified. There is a demand for this type of composition having improved solvent and hot water resistances while retaining the other characteristics of the polyether ketone/polysulphone resin compositions.

We have now found that the aforementioned difficulties of these compositions can be eliminated by incorporating an aromatic polysulphone with a polyether ketone having an intrinsic viscosity in a specific range which bears a definite relation with the weight percent of the polyether ketone in the composition.

According to this invention, there is provided a resin composition characterized by comprising 25 to 95% by weight of a polyether ketone consisting essentially of the following repeating unit: 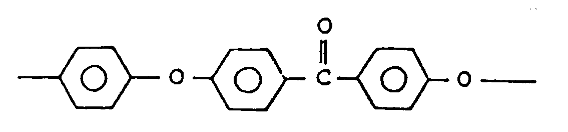
and 75 to 5% by weight of an aromatic polysulphone consisting essentially of the following repeating unit: 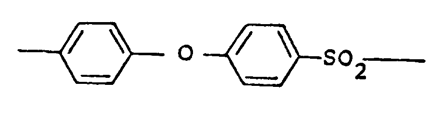
the intrinsic viscosity of the polyether ketone satisfying the following inequality:

$\text{0.83 ≦ y ≦ 0.01x + 0.65 (1)}$

wherein x represents the weight percentage of the polyether ketone in the resin composition and y represents the intrinsic viscosity of the polyether ketone,
the aromatic polysulphone having a reduced viscosity of 0.3 or above when determined at 25°C with a solution containing 1 g of the polysulphone in 100 mℓ of dimethylformamide.

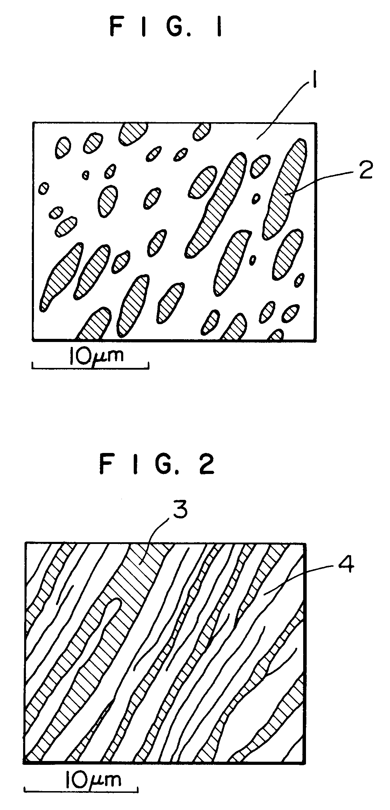

In the accompanying drawings, Figs. 1 and 2 are sectional views of the etched test pieces for a tensile test, which were obtained in Example 5 and Comparative Example 1, respectively. In the figures, 1 is the PEEK (polyether ether ketone) phase, 2 the PES (polyether sulphone) phase which was etched, 3 the void left behind after the PES phase had been etched away, and 4 the PEEK phase changed into a fibrous form.

The intrinsic viscosity of the polyether ketone, as referred to herein, is the value obtained at 25°C using a solution of the polyether ketone in concentrated sulphuric acid, 1.84 g/ml in density, containing 0.1 g of the polymer in 100 ml of the solution and calculated from the formula

$\text{Intrinsic viscosity = (t/t₀ - 1)/C (2)}$

where, t = efflux time (seconds) of the solution of concentration C,
t₀ = efflux time of the solvent,
C = concentration of the solution (g/100 ml).

The measurement was performed using a viscometer in which the efflux time of the solvent was 2 minutes. The intrinsic viscosity thus obtained is a value unconditionally corresponding to the molecular weight of the polymer.

A polyether ether ketone having a recurring unit represented by the formula 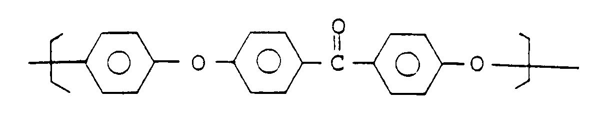
is, for example, Victrex PEEK of ICI Co.

The polyether ketone used in this invention preferably shows an intrinsic viscosity, y, complying with the condition

$\text{0.85 ≦ y ≦ 0.01 x + 0.65 (3)}$

and most preferably the condition

$\text{0.85 ≦ y ≦ 0.01 x + 0.60 (4)}$

If y is less than 0.83, the composition shows too high a melt fluidity due to the low molecular weight of the polyether ketone so that a steady moulding operation becomes difficult in the most popular injection moulding, resulting in a moulded product exhibiting shrink-marks (sink-marks) and lacking in dimensional precision owing to insufficient sustained pressure during the moulding. Conversely, if y so large that it complies with the condition

$\text{y > 0.01 x + 0.65 (5)}$

the composition shows a decline in its solvent resistance against good solvents for the aromatic polysulphone and in its resistance to hot water.

The aromatic polysulphone used as a component in the present composition is a polyarylene compound in which an arylene unit, an ether linkage and a sulphone linkage are arranged either at random or in perfect order, and has a good balance between their physical properties and their processability.

The composition of this invention is further improved in its physical properties, such as strength and toughness, and in its resistance against solvents and hot water, when the reduced viscosity of the aromatic polysulphone is 0.3 or above, as determined at 25°C in a dimethylformamide solution containing 1 g of the polymer in 100 ml of the solution. If the reduced viscosity of the aromatic polysulphone is below 0.3, even though the intrinsic viscosity of the polyether ketone, y, complies with the condition (1), thermal aging resistance, solvent resistance and mechanical characteristics of the composition deteriorate.

The blending ratio is from 25 to 95% by weight of a polyether ketone and from 75 to 5% by weight of an aromatic polysulphone, based on the sum of both components. If the content of aromatic polysulphone is below 5% by weight and the content of polyether ketone is above 95% by weight, the modulus of elasticity of the composition becomes markedly decreased at or above the glass transition temperature of the polyether ketone and, as a consequence, the deflection temperature and the creep resistance are not improved, being as low as those of the polyether ketone itself. If the content of polyether ketone is below 25% by weight and the content of aromatic polysulphone is above 75% by weight, the composition becomes inferior in solvent and hot water resistances, independent of the molecular weight of the polyether ketone. The improvement in the aforementioned properties of the composition is particularly marked when from 30 to 90% by weight of a polyether ketone and from 70 to 10% by weight of an aromatic polysulphone are compounded.

The means of compounding is not specifically restricted. It is possible to feed the aromatic polysulphone and the polyether ketone separately to a melt mixer, or to feed to a melt mixer a preliminary blend prepared by means of a mortar, a Henschel mixer, a ball mill or a ribbon blender, or to feed directly to an injection moulding machine a dry blend of powdered or pelletized polyether ketone and aromatic polysulphone.

The composition of this invention can be compounded with one or more common additives such as antioxidants, heat stabilizers, UV absorbers, release agents, colourants, nucleating agents and the like.

When a polyether ketone, which complies with the condition (1), and an aromatic polysulphone are compounded to form a composition of this invention, there is formed a "sea-and-island" structure, in which the polyether ketone forms the continuous phase and the aromatic polysulphone the dispersed phase. For this reason, even when the composition is immersed in a good solvent which affects the aromatic polysulphone or is exposed to hot water or steam at a temperature exceeding 180°C, the aromatic polysulphone component is hardly affected by the environment, because it is isolated from the environment by the surrounding continuous phase of polyether ketone, which has excellent environment resistance. Even if the polysulphone swells slightly or undergoes a slight structural change by taking up a small amount of the solvent, the composition is not much affected in its physical properties, such as its mechanical properties, because of the predominant characteristics of the polyether ketone which constitutes the continuous phase.

When a polyether ketone having an intrinsic viscosity, y, which complies with the condition (5) (i.e. outside the scope of the invention because y is too high) is compounded with an aromatic polysulphone, the polyether ketone tends to take a fibrous form and the aromatic polysulphone becomes the continuous phase. When such a composition is dipped in a good solvent for the aromatic polysulphone or is exposed to hot water or steam at a temperature exceeding 180°C, the aromatic polysulphone which constitutes the continuous phase tends to swell by the absorption of solvent or tends to soften by the absorption of water, resulting in a marked decrease in physical properties.

The invention is illustrated by the following Examples.

### EXAMPLES 1 to 7 and COMPARATIVE EXAMPLES 1 to 7

A polyether ketone having as a fundamental structure the recurring unit 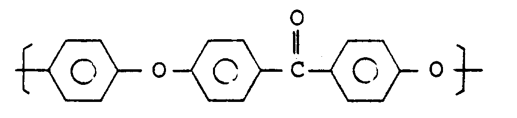
and an intrinsic viscosity of 0.8, 0.85, 0.90. 1.10 or 1.20 (determined as defined above) and a polyether sulphone having the recurring unit 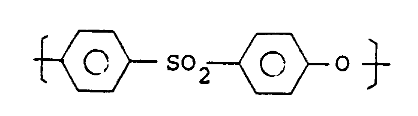
and a reduced viscosity of 0.42 or 0.52 (as determined at 25°C in a dimethylformamide solution containing 1 g of the polymer per 100 ml of the solution) were blended in the ratio shown in Table 1. The blend was melt-extruded at 360°C from a twin-screw extruder (PCM-30 of Ikegai Iron Works). After having been cooled in water, the extruded strand was pelletized and injection moulded into test pieces for the deflection temperature test and for the tensile test by means of an injection moulding machine (Sumitomo Nestal 47/28) under the following conditions: cylinder temperature: 380°C; injection pressure: 1,500 kg/cm²; injection speed: medium; injection time: 10 seconds; cooling time: 20 seconds; and mould temperature: 150°C.

The deflection temperature (HDT) test and the tensile test were performed according to ASTM D 648 and D 638, respectively. The stress cracking test was conducted on test pieces prepared as for the tensile test by immersing the test piece in ethyl acetate, a poor solvent for polyether sulphones, while subjecting them to a predetermined stress by means of an "Autograph" (Type DSS-2000 of Shimadzu Seisakusho Co.). The solvent resistance was tested on test pieces prepared as for the tensile test by immersing them in N-methyl-2-pyrrolidone, a good solvent for polyether sulphones, for 24 hours, determining the weight change, and then testing for the tensile strength by means of an "Autograph". The hot water resistance was tested on test pieces prepared as for the tensile test, by immersing them in hot water at 200°C in an autoclave for 24 hours, and then testing for the tensile strength by means of an "Autograph". The injection mouldability was evaluated by observing the steadiness of moulding the test pieces as described above and inspecting the appearance of injection moulded test pieces. The results of these tests are shown in Table 1.

As is apparent from Table 1, the composition complying with the conditions specified herein showed an improved modulus of elasticity at high temperatures, that is, a higher deflection temperature, as compared with a polyether ketone which shows a decrease in modulus of elasticity at high temperatures, that is, a low deflection temperature; moreover, the present composition sufficiently retained both the solvent resistance and the hot water resistance characteristic of the polyether ketone, and showed steady injection mouldability.

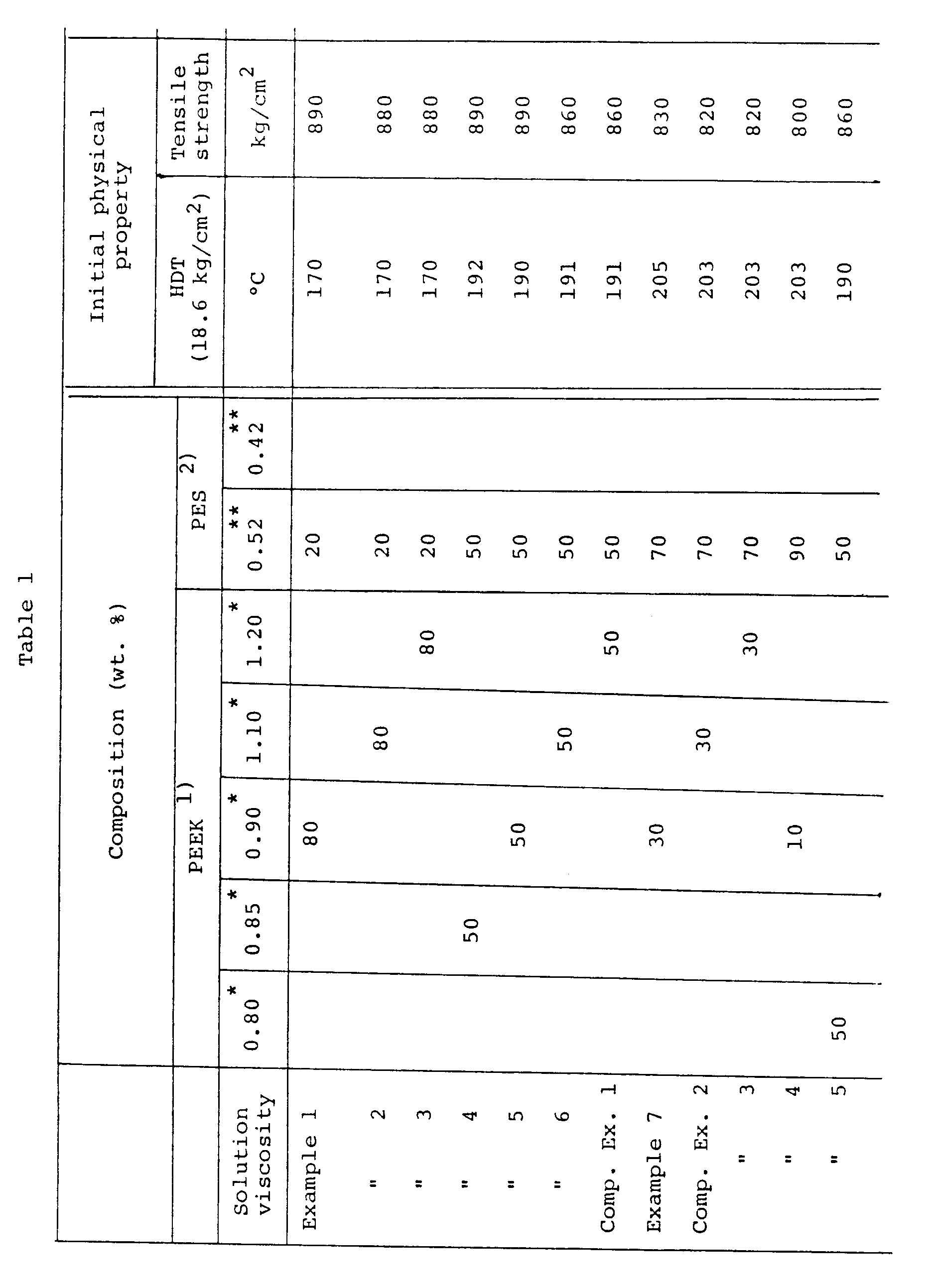

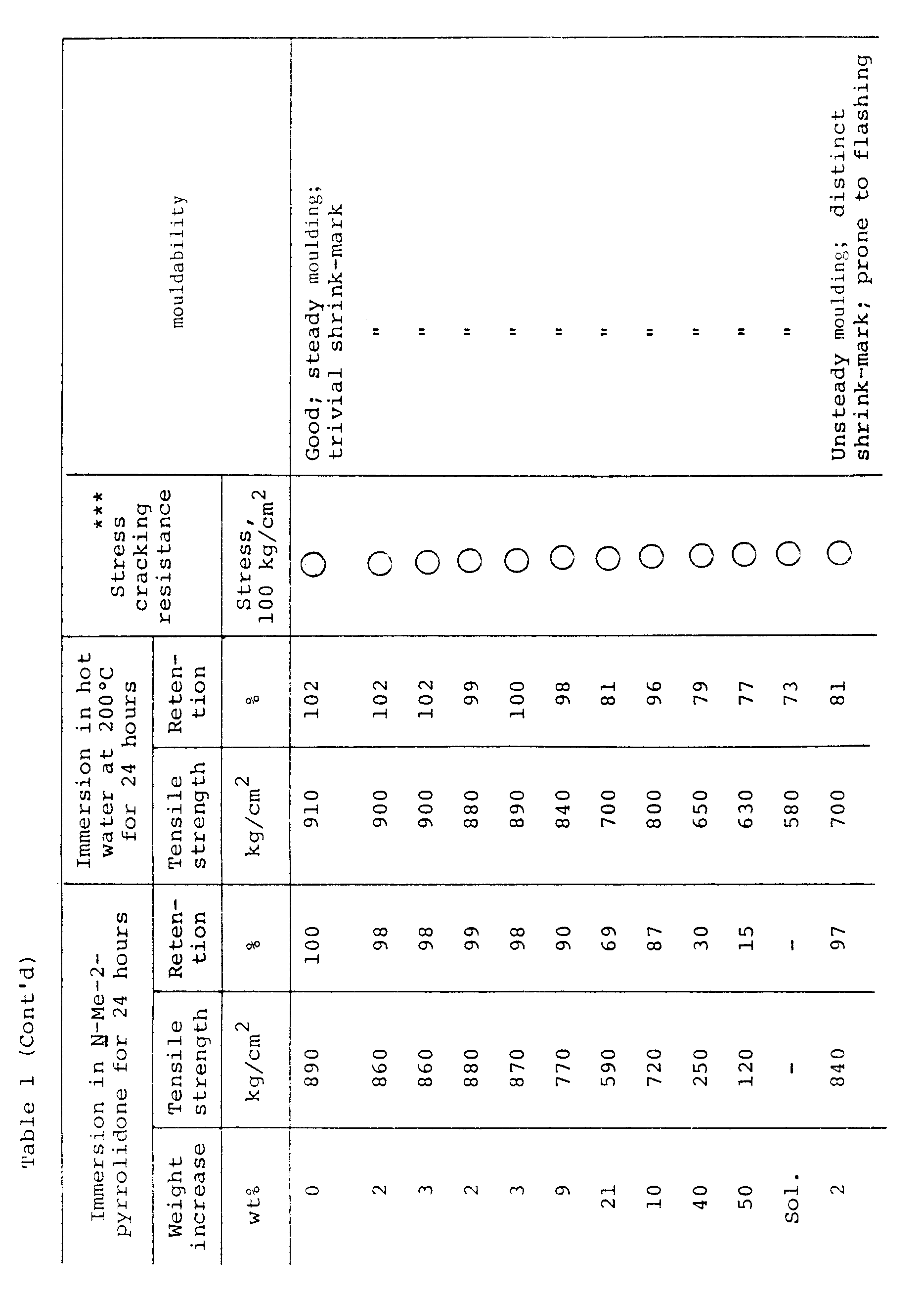

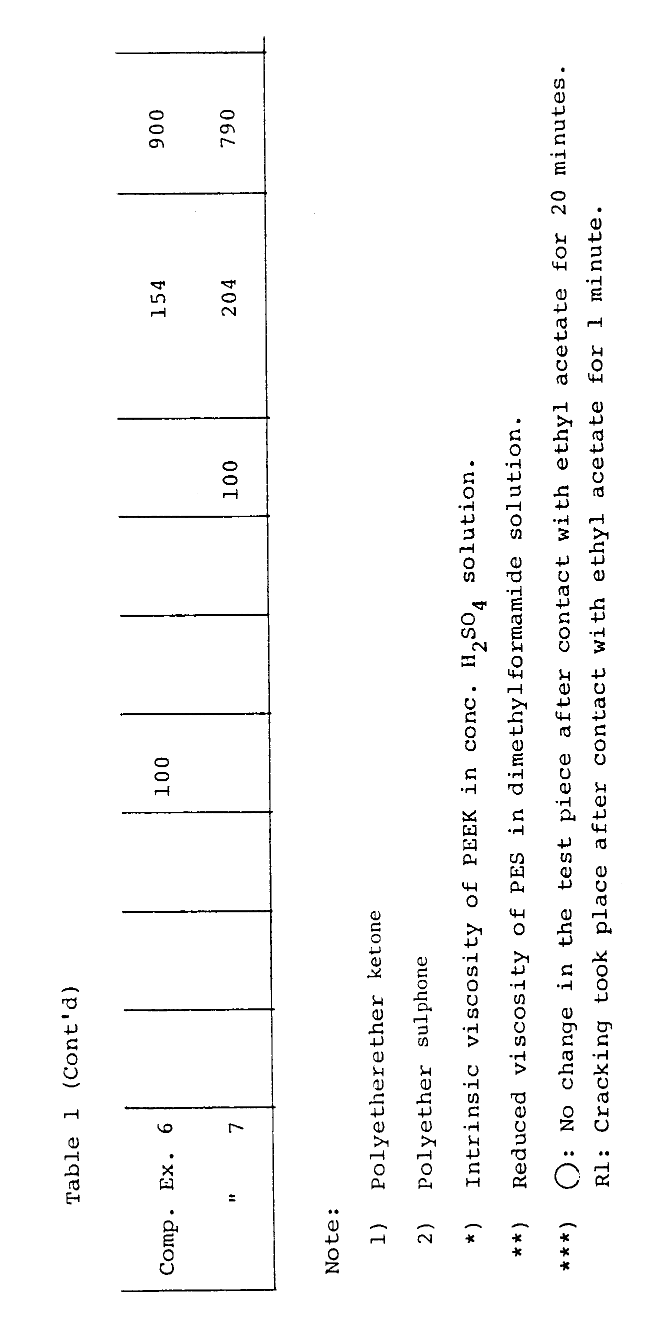

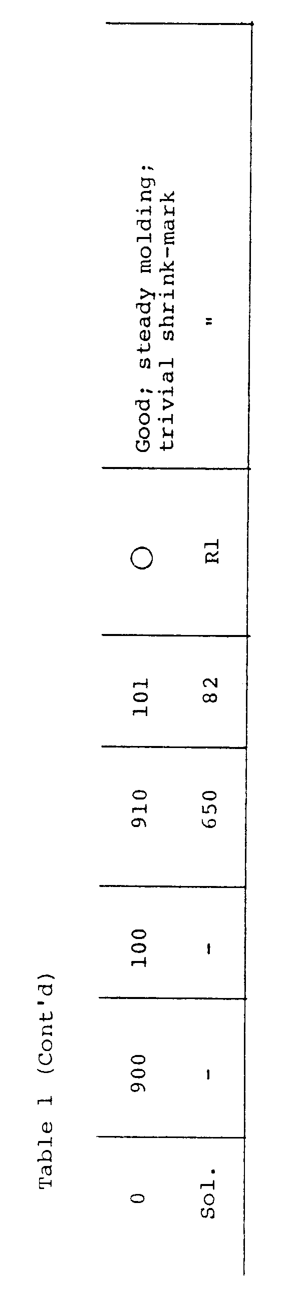

Structural analysis:
The test pieces obtained in Example 5 and Comparative Example 1 were cut, by means of a microtome, through in parallel to the direction of polymer flow in the injection mould in preparing the test pieces. The cut section was etched with N-methyl-2-pyrrolidone, a solvent for the aromatic polysulphone, and observed under a scanning electron microscope. The sectional views were as shown in Fig. 1 (test piece of Example 5) and Fig. 2 (test piece of Comparative Example 1). In the test piece of Example 5, it is seen that the polyether ketone, which is not etched, forms the continuous phase surrounding the scattered islands of polyether sulphone, whereas in the test piece of Comparative Example 1, the polyether ketone is in fibrous form and is surrounded by the continuous phase of polyether sulphone. In spite of the same compounding ratio between the polyether ketone and the polyether sulphone, the moulded test pieces of Example 5 and Comparative Example 1 are morphologically different to a great extent. Therefore, the difference in solvent resistance and hot water resistance between the moulded products of Examples 1 to 7 and those of Comparative Examples 1 to 3 seems to be ascribable to this morphological difference.

As described in the foregoing, according to this invention, by compounding from 25 to 95% by weight of a polyether ketone, having an intrinsic viscosity, y, which complies with the condition (1), with from 75 to 5% by weight of an aromatic polysulphone, it is possible to obtain a composition which has improved modulus of elasticity at a temperature exceeding the glass transition temperature of the polyether ketone and creep characteristics under high load, and has a desirable injection mouldability, without sacrificing the desirable solvent and hot water resistances of the polyether ketone.

## Claims

1. A resin composition characterized by comprising 25 to 95% by weight of a polyether ketone consisting of the following repeating unit: 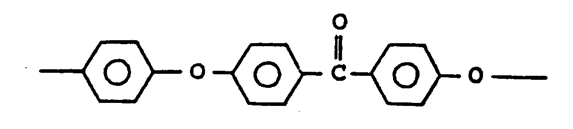 and 75 to 5% by weight of an aromatic polysulphone consisting of the following repeating unit: 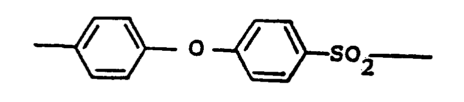 the intrinsic viscosity of the polyether ketone satisfying the following inequality:
$\text{0.83 ≦ y ≦ 0.01x + 0.65,}$
wherein x represents the weight percentage of the polyether ketone in the resin composition and y represents the intrinsic viscosity of the polyether ketone,
the aromatic polysulphone having a reduced viscosity of 0.3 or above when determined at 25°C with a solution containing 1 g of the polysulphone in 100 mℓ of dimethylformamide.

2. A resin composition according to Claim 1, wherein the intrinsic viscosity of the polyether ketone satisfies the following inequality:
$\text{0.85 ≦ y ≦ 0.01x + 0.60,}$
wherein x and y are defined as in Claim 1.

3. A resin composition according to Claim 1 or 2, wherein the composition comprises 30 to 90% by weight of the polyether ketone and 70 to 10% by weight of the aromatic polysulphone.

## Patentansprüche

1. Harzmasse, dadurch gekennzeichnet, daß sie 25 bis 95 Gew.-% eines aus der folgenden wiederkehrenden Einheit: 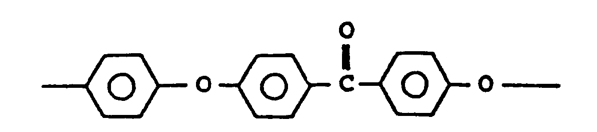 bestehenden Polyetherketons und 75 bis 5 Gew.-% eines aus der folgenden wiederkehrenden Einheit: 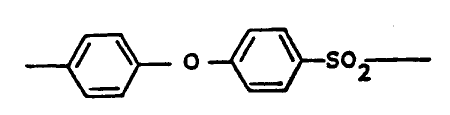 bestehenden aromatischen Polysulfons enthält, wobei die Intrinsikviskosität des Polyetherketons der folgenden Ungleichung:
$\text{0,83 ≦ y ≦ 0,01x + 0,65}$
worin bedeuten:
x den gewichtsprozentualen Anteil des Polyetherketons in der Harzmasse und
y die Intrinsikviskosität des Polyetherketons,
genügt und
das aromatische Polysulfon eine reduzierte Viskosität, bestimmt bei 25°C mit einer Lösung mit 1 g des Polysulfons in 100 ml Dimethylformamid, von 0,3 oder darüber aufweist.

2. Harzmasse nach Anspruch 1, wobei die Intrinsikviskosität des Polyetherketons der folgenden Ungleichung:
$\text{0,85 ≦ y ≦ 0,01x + 0,60}$
worin x und y die in Anspruch 1 angegebene Bedeutung besitzen, genügt.

3. Harzmasse nach Anspruch 1 oder 2, wobei die Masse 30 bis 90 Gew.-% des Polyetherketons und 70 bis 10 Gew.-% des aromatischen Polysulfons enthält.

## Revendications

1. Composition de résine, caractérisée en ce qu'elle comprend de 25 à 95% en poids d'une polyéthercétone composée du motif répétitif suivant 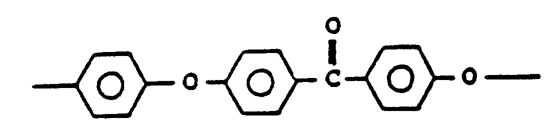 et de 75 à 5% en poids d'une polysulfone aromatique composée du motif répétitif suivant 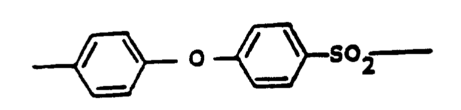 la viscosité intrinsèque de la polyéthercétone satisfaisant à l'inégalité suivante
$\text{0,83 ≦ y ≦ 0,01x + 0,65,}$
dans laquelle x représente le pourcentage en poids de la polyéthercétone dans la composition de résine et y représente la viscosité intrinsèque de la polyéthercétone,
la polysulfone aromatique ayant une viscosité réduite de 0,3 ou plus, déterminée à 25°C sur une solution contenant 1 g de la polysulfone dans 100 ml de diméthylformamide.

2. Composition de reine selon la revendication 1, dans laquelle la viscosité intrinsèque de la polyéthercétone satisfait à l'inégalité suivante
$\text{0,85 ≦ y ≦ 0,01x + 0,60}$
dans laquelle x et y sont tels que définis dans la revendication 1.

3. Composition de résine selon la revendication 1 ou 2, laquelle composition comprend de 30 à 90% en poids de la polyéthercétone et de 70 à 10% en poids de la polysulfone aromatique.
